# EUROPÄISCHE PATENTSCHRIFT

(11) **EP 1 593 864 B1**
(45) Veröffentlichungstag und Bekanntmachung des Hinweises auf die Patenterteilung: **12.03.2008**
(21) Anmeldenummer: 04019976.2
(22) Anmeldetag: 23.08.2004
(51) Int. Cl.: F16C 13/00, D21G 1/02

(54) **Biegeausgleichswalze**
Controlled deflection roll
Rouleau à réglage de la flexion

(30) Priorität: 06.05.2004 DE 102004022377
(43) Veröffentlichungstag der Anmeldung: 09.11.2005
(73) Patentinhaber: Voith Patent GmbH, 89522 Heidenheim (DE)
(72) Erfinder: van Haag, Rolf, Dr., 47647 Kerken (DE)

(56) Entgegenhaltungen:
- EP-A- 1 281 879
- EP-A- 1 411 254
- WO-A-98/17862
- WO-A-02/064886
- FI-B- 79 571

## Beschreibung

Die Erfindung betrifft eine Biegeausgleichswalze der im Oberbegriff des Anspruchs 1 angegebenen Art. Eine derartige Walze ist in der FI 79 571 B beschrieben.

Derzeit erfolgt beispielsweise die Druckregelung von Biegeausgleichswalzen mittels hydraulischer Ventile, für die eine Vielzahl von Schaltungsvarianten existiert. Dazu zählen unter anderem die Varianten, bei denen die betreffenden Druckregelventile im Innern der Walze integriert sind. Eine solche Bauweise besitzt gegenüber einer Positionierung außerhalb der Walze bei der Druckregelung dynamischer Probleme besondere Vorteile, da die Leitungslängen zwischen den Stützquellen und den Ventilen minimiert werden können. Dennoch ist diese Bauweise in der Vergangenheit nur selten realisiert worden, was darauf zurückzuführen ist, dass die Instandhaltung solcher Systeme zu aufwändig bzw. die Technik zu anfällig erscheint. So müsste in einem solchen Fall bei einem Ventilausfall die gesamte Walze demontiert werden.

Bei der aus der FI 79 571 B1 bekannten Biegeausgleichswalze werden die der Schmierung der Stützquellen dienenden Hydrostatiktaschen über Kapillaren mit Fluid aus dem jeweiligen Druckraum der Stützquellen versorgt.

Der Erfindung liegt die Aufgabe zugrunde, eine verbesserte Biegeausgleichswalze der eingangs genannten Art zu schaffen, bei der die zuvor genannten Probleme beseitigt sind.

Diese Aufgabe wird erfindungsgemäß dadurch gelöst, dass die Stützquelle in einem Zweikreissystem betrieben ist, in dem das Elektrorheologische Fluid (ERF) bzw. Ferrofluid nur der Druckregelung dient und die Schmierung der Stützquelle mit herkömmlichem Öl erfolgt.

Erfindungsgemäß wird also der Umstand ausgenutzt, dass sich die Fließeigenschaft bzw. Viskosität eines Elektrorheologischen Fluids oder Ferrofluids unter dem Einfluss eines elektrischen bzw. magnetischen Feldes ändert, das heißt zum Beispiel ein hydraulischer Druck bzw. ein Volumenstrom durch Veränderung des betreffenden Feldes variiert werden kann.

Unter dem Einfluss des betreffenden Feldes können die Fließeigenschaften der Elektrorheologischen Fluide (ERF) bzw. Ferrofluide stufenlos und reversibel verändert werden. Bei den heute verfügbaren ER-Flüssigkeiten handelt es sich insbesondere um Silikonöl, in dem Polyurethanpartikel dispergiert sind. Mit zunehmender elektrischer Spannung bzw. Feldstärke nimmt die scheinbare Viskosität der ERF im Feld zu und der Volumenstrom ab. Die Eigenschaften eines Elektrorheologischen Fluids (ERF) bzw. Ferrofluids erlauben also beispielsweise eine relativ einfache, schnelle und sehr ausfallsichere Stützquellen-Druckregelung. Zudem können gezielt bestimmte Dämpfungseigenschaften an der Stützquelle realisiert oder auch das Schwingungsverhalten des Walzenmantels gezielt beeinflusst werden.

Über das die Viskosität des Elektrorheologischen Fluids (ERF) bzw. Ferrofluids beeinflussende Feld kann also der hydraulische Druck entsprechend variiert werden. Es ist also insbesondere der Druck in der Druckkammer einer jeweiligen Stützquelle entsprechend variierbar. Dabei ist eine Druckregelung vorgesehen.

Grundsätzlich ist über das die Viskosität des Elektrorheologischen Fluids (ERF) bzw. Ferrofluids beeinflussende Feld auch der Volumenstrom variierbar. Dabei kann beispielsweise eine Volumenstromregelung vorgesehen sein.

Über das die Viskosität des Elektrorheologischen Fluids (ERF) bzw. Ferrofluids beeinflussende Feld können überdies beispielsweise auch die Dämpfungseigenschaften an der Stützquelle variiert werden.

Bei einer weiteren zweckmäßigen Ausführungsform der erfindungsgemäßen Biegeausgleichswalze sind über das die Viskosität des Elektrorheologischen Fluids (ERF) bzw. Ferrofluids beeinflussende Feld und die entsprechenden Änderungen im Druckraum der Stützquelle die Schwingungseigenschaften des Walzenmantels entsprechend variierbar.

Dabei können mehrere Stützquellen über eine gemeinsame Versorgungsleitung mit dem Elektrorheologischen Fluid (ERF) bzw. Ferrofluid versorgt sein, in der der Systemdruck (z.B. Pumpendruck) gehalten wird.

Zwischen dem Druckraum einer jeweiligen Stützquelle und der gemeinsamen Versorgungsleitung ist bevorzugt jeweils eine Verbindungsleitung vorgesehen, in die eine Drosselstelle integriert ist, in der zur Erzeugung des Feldes ein elektrischer Leiter, Kabel oder dergleichen angeordnet ist.

Vorteilhafterweise ist ein direkt mit dem Druckraum der Stützquelle verbundener Druckaufnehmer vorgesehen. Ein solcher Druckaufnehmer kann dann beispielsweise den Istdruck zur Regelung des hydraulischen Drucks unter der Stützquelle liefern. Grundsätzlich kann ein handelsüblicher Druckaufnehmer verwendet werden.

Für die Druckregelung einer Stützquelle sind somit im Innern der Walze lediglich die Drosselstelle mit isoliertem Spannungsanschluss, zwei Kabel bzw. Leiter und ein Druckaufnehmer erforderlich.

Der zur Druckregelung vorgesehene elektrische Regler ist bevorzugt außerhalb der Walze angeordnet.

Da nur eine hydraulische Zulaufleitung erforderlich ist, vereinfacht sich die mechanische Konstruktion des Walzensystems erheblich. So können gegenüber einer konventionellen Konstruktion mit mehreren Stellzonen beispielsweise die folgenden Bauteile entfallen: Hydraulikventile, Zulaufleitungen, Schnellkupplungen, Rohrbündel im Innern der Walze.

Bei der vorliegenden Walzenkonstruktion ist zweckmäßigerweise eine Bauform mit außenliegenden Lagerstellen und Getrieben zu wählen, da mit den im Elektrorheologischen Fluid (ERF) bzw. Ferrofluid befindlichen polarisierbaren Feststoffteilchen (Durchmesser ca. 5 µm) unter Umständen keine Wälzlagerung und Getriebe geschmiert werden können. Die Hydrostatik verkraftet diese Teilchen, da die Spalte etwa um das Zehnfache größer sind.

Erfindungsgemäß wird die Stützquelle jedoch in einem Zweikreissystem betrieben, in dem das Elektrorheologische Fluid (ERF) bzw. Ferrofluid nur der Druckregelung dient und die Schmierung der Stützquelle mit herkömmlichem Öl erfolgt. Sind mehrere Stützquellen vorgesehen, so wird vorzugsweise jede Stützquelle im Zweikreissystem betrieben.

Das heute noch relativ teure ER-Fluid wird im vorliegenden Fall also nur zur Druckregelung verwendet, was bedeutet, dass wesentlich weniger ER-Fluid benötigt wird. Die Schmierung der hydrostatischen Stützquelle erfolgt mit herkömmlichem Öl, wozu die Öltaschen der Stützquelle mit konstantem Volumenstrom versorgt werden können. Dieser wird vorzugsweise durch Mengenteiler erzeugt, die nach der Hydraulikpumpe geschaltet werden. Die Versorgung des relativ zum Joch beweglichen Stützquellenkopfes kann über Schlauchleitungen erfolgen. Grundsätzlich sind auch beliebige andere Konstruktionsvarianten denkbar. Ebenso kann ein konstanter Druck in Kombination mit vorgeschalteten Drosseln zur Versorgung des Stützquellenkopfes verwendet werden. Der konstante Druck muss in diesem Fall jedoch stets größer sein als der maximal mögliche Stützquellendruck im Kolbenraum, d.h. dem Druckraum der Stützquelle.

Für die Regelung des Druckes im Druckraum der Stützquelle muss das Elektrorheologische Fluid (ERF) bzw. Ferrofluid in einem separaten Kreislauf fließen, da nur bei einem fließenden Fluid eine Druckregelung durch Viskositätsänderung möglich ist. Aus diesem Grunde ist bei der vorliegenden Ausführungsvariante zwischen dem Druckraum einer jeweiligen Stützquelle und dem Tank der ERF- bzw. Ferrofluid-Versorgung jeweils eine Verbindungsleitung vorgesehen, in die eine Drosselstelle zum Halten des Druckes im Druckraum integriert ist.

Die zum Halten des Drucks im Druckraum der Stützquelle erforderliche Drosselstelle in der Verbindungsleitung zum ERF- bzw. Ferrofluid-Tank kann auf herkömmliche Weise ausgeführt sein. So kann diese Drosselstelle beispielsweise eine Blende oder Kapillare umfassen.

Die Drosselstelle kann jedoch auch wieder über ein elektrisches bzw. magnetisches Feld regelbar sein, d.h. beispielsweise wieder einen elektrischen Leiter, Kabel oder dergleichen zur Erzeugung des Feldes umfassen. Eine solche geregelte Variante besitzt den Vorteil, dass der Zirkulations-Volumenstrom einer jeweiligen Stützquelle unabhängig vom Druck relativ konstant gehalten werden kann. Bei der zuvor genannten, technisch einfacheren Variante, bei der die Abdrosselung über Kapillaren oder Drosselstellen erfolgt und bei der die Stützquelle ausschließlich mit dem Elektrorheologischen Fluid (ERF) bzw. Ferrofluid betrieben ist, ist der zirkulierende Volumenstrom in etwa proportional zum Kolbendruck.

Sämtliche Konstruktionsvarianten ermöglichen eine sehr schnelle Druckregelung, da der zwischen dem Stellglied (im Bereich einer Millisekunde elektrisch regelbare Drossel durch Viskositätsänderung) und dem Druckraum der Stützquelle keine Verbindungsleitung geschaltet ist. Im Fall eines schwingenden Walzenmantels kann die Druckänderung so schnell geregelt werden, dass eine aktive Schwingungsbeeinflussung möglich ist.

Wie bereits erwähnt, kann der ERF- bzw. Ferrofluid-Effekt auch zur gezielten Steigerung der Dämpfungseigenschaften einer jeweiligen Stützquelle genutzt werden. So kann beispielsweise durch das Aufschalten einer Spannung auf die Führungsbuchse einer jeweiligen Stützquelle die Viskosität des Fluids zwischen der Führungsbuchse und dem Joch örtlich stark erhöht werden, was zu einer deutlichen Steigerung der viskosen Dämpfung einer relativ zum Joch bewegten Stützquelle führt. Die Führungsbuchse sollte in diesem Fall zum Stützquellenkopf elektrisch isoliert sein, da es andernfalls im Fall einer Mischreibung des Stützquellenkopfes auf dem rotierenden Walzenmantel zu einem Spannungsabfall (Kurzschluss) kommen kann. Diese Dämpfungseigenschaft ist ebenfalls aktiv beeinflussbar bzw. regelbar.

Eine weitere bevorzugte Ausführungsform der erfindungsgemäßen Biegeausgleichswalze zeichnet sich dadurch aus, dass der Stützquelle ein Dämpfer zugeordnet ist, der einerseits am Stützquellenkopf und anderseits am Joch abgestützt ist und Elektrorheologisches Fluid (ERF) bzw. Ferrofluid enthält, über dessen durch ein entsprechendes Feld beeinflussbare Viskosität die Dämpfungseigenschaften am relativ zum Joch bewegbaren Stützquellenkopf und/oder die Schwingungseigenschaften des Walzenmantels variierbar sind.

Dabei kann der Dämpfer beispielsweise einen das Elektrorheologische Fluid (ERF) bzw. Ferrofluid enthaltenden Zylinder und einen im Zylinder angeordneten Kolben umfassen, dessen Außenquerschnitt geringer als der Innenquerschnitt des Zylinders ist, so dass im Betrieb durch den Kolben verdrängtes Fluid den radialen Bereich zwischen dem Kolben und der Zylinderinnenseite passieren kann. Das jeweilige, die Viskosität des Elektrorheologischen Fluids bzw. Ferrofluids beeinflussende Feld kann in diesem Fall also in dem radialen Bereich zwischen dem Kolben und der Zylinderinnenseite erzeugt werden.

Zweckmäßigerweise ist der Dämpfer einerseits über seinen Zylinder und andererseits über eine vom Innern des Zylinders nach außen geführte Kolbenstange am Stützquellenkopf bzw. Joch oder umgekehrt abgestützt.

Bevorzugt ist der Dämpfer jeweils über ein Kugelgelenk am Stützquellenkopf bzw. Joch abgestützt.

Der Dämpfer kann zumindest im Wesentlichen innerhalb des Druckraums der Stützquelle angeordnet sein.

Bei einer weiteren vorteilhaften Ausführungsform der erfindungsgemäßen Biegeausgleichswalze ist die Stützquelle als Ringelement ausgeführt.

Dabei steht der vom Ringelement umschlossene Innenraum vorzugsweise mit einer Ablaufleitung in Verbindung, in die eine Drosselstelle integriert ist, die dadurch variabel einstellbar ist, dass die Viskosität eines durch diese Drosselstelle fliesenden Elektrorheologischen Fluids bzw. Ferrofluids über ein elektrisches bzw. magnetisches Feld variierbar ist. Hierbei kann die Drosselstelle beispielsweise einen in der Ablaufleitung angeordneten elektrischen Leiter umfassen, über den das Feld erzeugbar ist.

Vorteilhafterweise ist ein direkt mit dem Druckraum der Stützquelle verbundener Druckaufnehmer vorgesehen.

Zweckmäßigerweise kann auch ein direkt mit den Innenraum verbundener Druckaufnehmer vorgesehen sein.

Im übrigen kann das die Stützquelle bildende Ringelement insbesondere so ausgeführt sein und betrieben werden, wie dies in den Druckschriften DE 44 29 499 C1 und DE 195 40 791 C1 beschrieben ist.

Während die Viskosität eines jeweiligen Elektrorheologischen Fluids (ERF) in der Regel über ein elektrisches Feld oder eine elektrische Spannung veränderbar ist, ist bei den ebenfalls einsetzbaren Ferrofluiden die Viskosität durch das Aufschalten eines entsprechenden Magnetfeldes veränderbar.

Die Erfindung wird im Folgenden anhand von Ausführungsbeispielen unter Bezugnahme auf die Zeichnung näher erläutert; in dieser zeigen:
- Figur 1: eine schematische, geschnittene Teildarstellung einer lediglich dem besseren Verständnis dienenden beispielhaften Ausführungsform einer Biegeausgleichswalze, bei der die Stützquelle ausschließlich mit dem Elektrorheologischen Fluid (ERF) bzw. Ferrofluid betrieben ist,
- Figur 2: eine schematische geschnittene Ausführungsform der erfindungsgemäßen Biegeausgleichswalze, bei der die Stützquelle in einem Zweikreissystem betrieben ist,
- Figur 3: eine Abwandlung der Biegeausgleichswalze gemäß Figur 2, bei der die Drosselstelle einen elektrischen Leiter umfasst,
- Figur 4: eine schematische geschnittene Teildarstellung einer weiteren Ausführungsform der Biegeausgleichswalze, bei der die viskose Dämpfung der relativ zum Joch bewegten Stützquelle variierbar ist,
- Figur 5: eine vergrößerte Darstellung eines Ausschnitts aus der Figur 4,
- Figur 6: eine schematische geschnittene Teildarstellung einer weiteren Ausführungsform der Biegeausgleichswalze mit einem der Stützquelle zugeordneten, einerseits am Stützquellenkopf und andererseits am Joch abgestützten Dämpfer,
- Figur 7: eine vergrößerte Darstellung eines Ausschnitts aus der Figur 6,
- Figur 8: eine schematische geschnittene Teildarstellung einer lediglich dem besseren Verständnis dienenden weiteren Ausführungsform der Biegeausgleichswalze, bei der die Stützquelle als Ringelement ausgeführt ist, und
- Figur 9: eine mit der Ausführungsform gemäß Figur 8 vergleichbare Ausführungsform, wobei außer dem mit dem Druckraum verbundenen Druckaufnehmer jedoch zusätzlich noch ein mit dem Innenraum verbundener Druckaufnehmer vorgesehen ist.

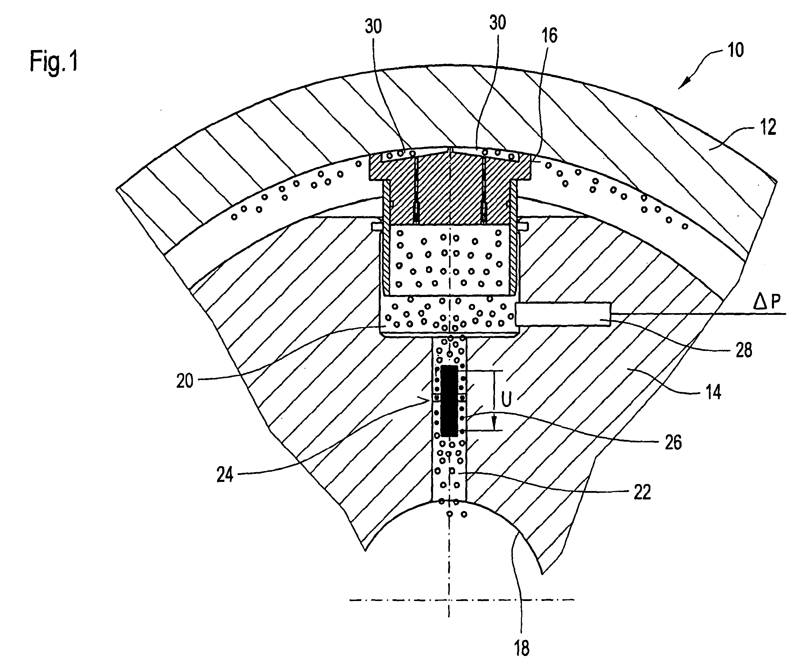

Figur 1 zeigt in schematischer, geschnittener Teildarstellung eine Biegeausgleichswalze 10, die einen umlaufenden Walzenmantel 12, ein den Walzenmantel 12 axial durchsetzendes drehfestes Joch 14 und wenigstens eine zwischen dem Joch 14 und dem Walzenmantel 12 angeordnete Stützquelle 16 umfasst.

Im vorliegenden Fall ist die Stützquelle 16 ausschließlich mit einem Elektrorheologischen Fluid (ERF) bzw. Ferrofluid betrieben, dessen Viskosität über ein elektrisches bzw. magnetisches Feld variierbar ist.

Dabei kann über das die Viskosität des Elektrorheologischen Fluids (ERF) bzw. Ferrofluids beeinflussende Feld insbesondere der hydraulische Druck variiert werden, wobei insbesondere eine Druckregelung vorgesehen sein kann. Es sind mehrere, vorzugsweise sämtliche Stützquellen 16 über eine gemeinsame Versorgungsleitung 18 mit dem Elektrorheologischen Fluid (ERF) bzw. Ferrofluid versorgt, in der der Systemdruck (zum Beispiel Pumpendruck) gehalten wird.

Zwischen dem Druckraum 20 einer jeweiligen Stützquelle 16 und der gemeinsamen Versorgungsleitung 18 ist jeweils eine Verbindungsleitung 22 vorgesehen. In diese Verbindungsleitung 22 ist eine Drosselstelle 24 integriert, in der zur Erzeugung des Feldes ein elektrischer Leiter 26, eine Spule oder dergleichen angeordnet ist.

Zudem ist ein direkt mit dem Druckraum 20 der Stützquelle 16 verbundener Druckaufnehmer 28 vorgesehen.

Der zur Druckregelung vorgesehene elektrische Regler ist vorzugsweise außerhalb der Walze 10 angeordnet.

Im vorliegenden Fall wird also vorzugsweise jede Stützquelle 16 ausschließlich mit dem Elektrorheologischen Fluid (ERF) bzw. Ferrofluid betrieben. Die Druckversorgung erfolgt über die gemeinsame Versorgungsleitung 18 für sämtliche Stützquellen oder Stützelemente 16, in der der Systemdruck (z.B. Pumpendruck) gehalten wird. In der Verbindungsleitung 22 zum Druckraum 20 einer jeweiligen Stützquelle 16 ist eine Drosselstelle 24 integriert, in der mittels des elektrischen Leiters 26, Spule oder dergleichen das betreffende Feld aufgebaut werden kann. Im vorliegenden Fall wird ein elektrisches Feld erzeugt bzw. eine Spannung angelegt, d.h. es wird hier die Viskosität eines Elektrorheologischen Fluids (ERF) entsprechend beeinflusst. Wie erwähnt, kann jedoch beispielsweise auch ein Ferrofluid eingesetzt werden, dessen Viskosität dann über ein entsprechendes magnetisches Feld entsprechend beeinflussbar ist.

Zur Regelung des hydraulischen Drucks unter der Stützquelle 16 wird der Istdruck mit dem Druckaufnehmer 28 erfasst, der durch einen handelsüblichen Druckaufnehmer gebildet sein kann. Für die Druckregelung einer Stützquelle 16 sind somit im Innern der Biegeausgleichswalze 10 lediglich die Drosselstelle beispielsweise mit isoliertem Spannungsanschluss, zwei Kabel und ein Druckaufnehmer 28 erforderlich.

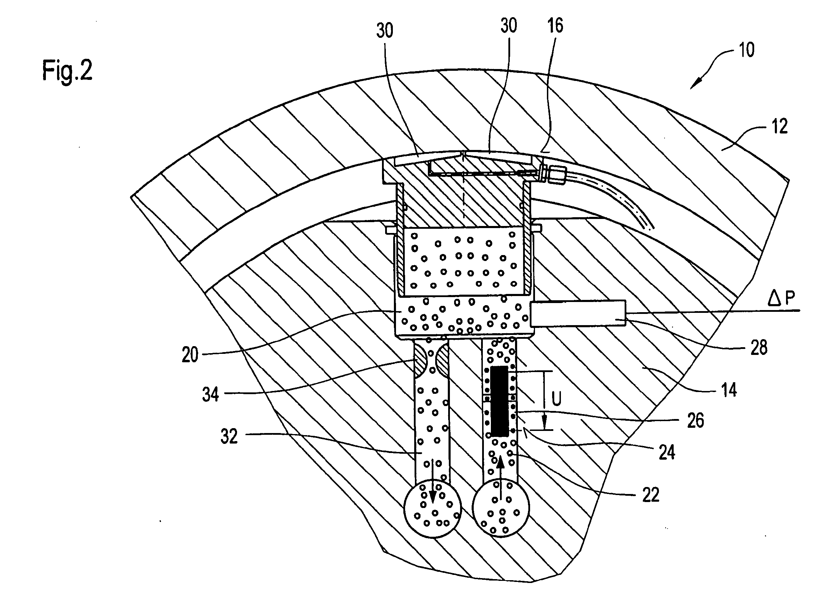

Figur 2 zeigt in schematischer, geschnittener Teildarstellung eine Ausführungsform der Biegeausgleichswalze 10, bei der wenigstens eine, vorzugsweise sämtliche Stützquellen 16 in einem Zweikreissystem betrieben sind. In einem solchen Zweikreissystem dient das Elektrorheologische Fluid (ERF) bzw. Ferrofluid nur der Druckregelung, während die Schmierung einer jeweiligen Stützquelle 16 mit herkömmlichem Öl erfolgt.

Das derzeit noch relativ teure Elektrorheologische Fluid (ERF) bzw. Ferrofluid wird also nur zur Druckregelung verwendet, was bedeutet, dass weniger ER-Fluid bzw. Ferrofluid benötigt wird. Zur Schmierung der hydrostatischen Stützquelle 16 werden die Öltaschen 30 der Stützquelle 16 mit konstantem Volumenstrom versorgt. Dieser wird vorzugsweise durch Mengenteiler erzeugt, die nach der Hydraulikpumpe geschaltet werden. Die Versorgung des relativ zum Joch 14 beweglichen Stützquellenkopfes kann über Schlauchleitungen erfolgen. Es sind auch andere Konstruktionsvarianten denkbar. Ebenso kann ein konstanter Druck in Kombination mit vorgeschalteten Drosseln zur Versorgung des Stützquellenkopfes verwendet werden. Der konstante Druck muss in diesem Fall jedoch stets größer sein als der maximal mögliche Stützquellendruck im Druckraum 20 der Stützquelle 16.

Für die Druckregelung im Druckraum 20 der Stützquelle 16 muss das Fluid in einem separaten Kreislauf fließen, da nur bei einem fließenden Fluid eine Druckregelung durch Viskositätsänderung möglich ist. Aus diesem Grunde ist bei der vorliegenden Ausführungsform zwischen dem Druckraum 20 einer jeweiligen Stützquelle 16 und dem Tank der ERF- bzw. Ferrofluid-Versorgung jeweils eine Verbindungsleitung 32 vorgesehen, in die eine Drosselstelle 34 zum Halten des Drucks im Druckraum 20 integriert ist.

Die zum Halten des Kolbendrucks notwendige Drosselstelle 34 in der Verbindungsleitung 32 kann herkömmlich ausgeführt und beispielsweise durch eine Blende oder Kapillare gebildet sein.

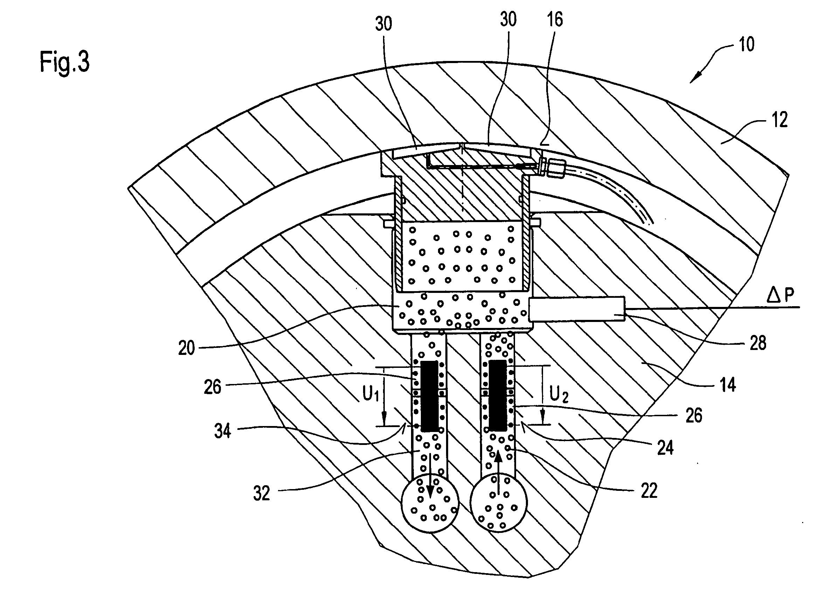

Auch bezüglich dieser Drosselstelle 34 ist jedoch grundsätzlich auch wieder eine elektrisch oder magnetisch geregelte Variante denkbar. Eine entsprechende Ausführungsform ist in der Figur 3 wiedergegeben, bei der die betreffende Drosselstelle 34 beispielsweise wieder einen elektrischen Leiter 26, Kabel, Spule oder dergleichen umfasst. Eine solche geregelte Variante besitzt den Vorteil, dass der Zirkulations-Volumenstrom einer jeweiligen Stützquelle 16 unabhängig vom Druck relativ konstant gehalten werden kann. Bei der technisch einfacheren Variante gemäß Figur 2 ist der zirkulierende Volumenstrom in etwa proportional zum Kolbendruck.

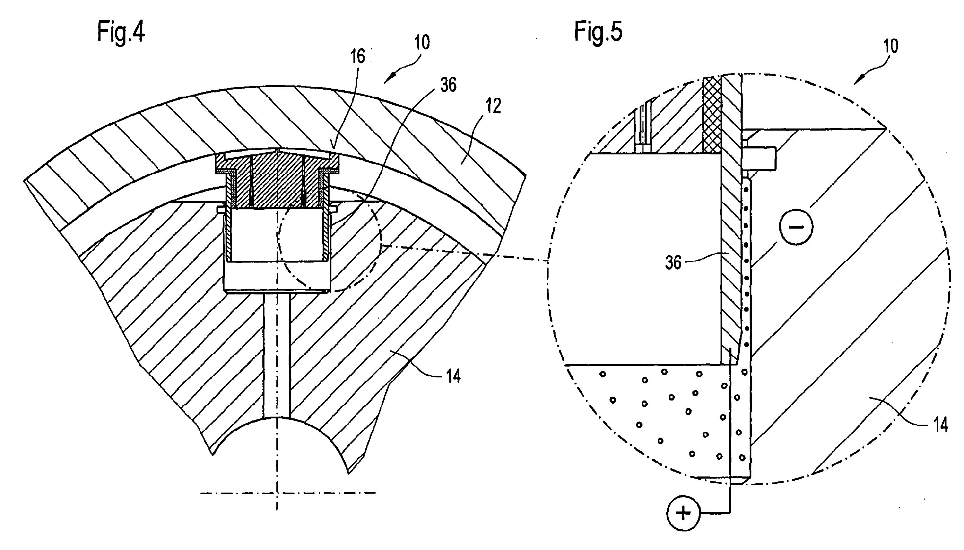

Figur 4 zeigt in schematischer, geschnittener Teildarstellung eine weitere Ausführungsform der Biegeausgleichswalze 10, bei der die viskose Dämpfung der relativ zum Joch 14 bewegten Stützquelle 16 variierbar ist. Figur 5 zeigt eine vergrößerte Darstellung eines Ausschnitts aus Figur 4.

Im vorliegenden Fall ist über die Viskosität des Elektrorheologischen Fluids (ERF) bzw. Ferrofluids zwischen der Führungsbuchse 36 der Stützquelle 16 und dem Joch 14 die viskose Dämpfung der relativ zum Joch 14 bewegten Stützquelle variierbar.

Der ERF- bzw. Ferrofluid-Effekt kann also auch zur gezielten Steigerung der Dämpfungseigenschaften der Stützquelle 16 genutzt werden. Durch Aufschalten z.B. einer Spannung auf die Führungsbuchse 36 der Stützquelle 16 kann die Viskosität des Fluids zwischen der Führungsbuchse 36 und dem Joch 14 stark erhöht werden, was zu einer deutlichen Steigerung der viskosen Dämpfung der relativ zum Joch 14 bewegten Stützquelle 16 führt.

Die Führungsbuchse 36 sollte in diesem Fall zum Stützquellenkopf elektrisch isoliert sein, da es andernfalls im Fall einer Mischreibung des Stützquellenkopfes auf dem rotierenden Walzenmantel 12 zu einem Spannungsabfall bzw. Kurzschluss kommen kann. Auch diese Dämpfungseigenschaft ist aktiv regelbar.

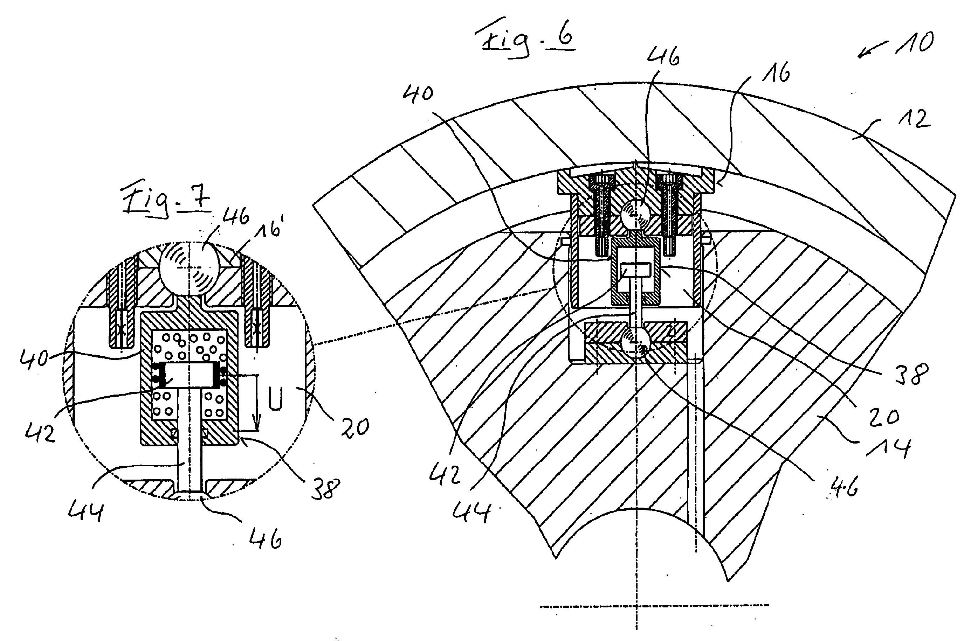

Figur 6 zeigt in schematischer geschnittener Teildarstellung eine weitere Ausführungsform der Biegeausgleichswalze 10, bei der der Stützquelle 16 ein Dämpfer 38 zugeordnet ist, der einerseits am Stützquellenkopf 16' und andererseits am Joch 14 abgestützt ist.

Der Dämpfer 38 enthält Elektrorheologisches Fluid (ERF) bzw. Ferrofluid, über dessen durch ein entsprechendes Feld beeinflussbare Viskosität die Dämpfungseigenschaften am relativ zum Joch 14 bewegbaren Stützquellenkopf 16' und/oder die Schwingungseigenschaften des Walzenmantels 12 variierbar sind. Beim vorliegenden Ausführungsbeispiel umfasst der Dämpfer 38 einen das Elektrorheologische Fluid bzw. Ferrofluid enthaltenden Zylinder 40 und einen im Zylinder 40 angeordneten Kolben 42. Der Außenquerschnitt des Kolbens 42 ist geringer als der Innenquerschnitt des Zylinders 40, so dass im Betrieb durch den Kolben 42 verdrängtes Fluid den radialen Bereich zwischen dem Kolben 42 und der Zylinderinnenseite passieren kann.

Das jeweilige, die Viskosität des Elektrorheologischen Fluids bzw. Ferrofluids beeinflussende Feld wird in dem radialen Bereich zwischen dem Kolben 42 und der Zylinderinnenseite erzeugt. Dabei kann beispielsweise zwischen dem Kolben 42 und dem Zylinder 38 in der in der Figur 7 dargestellten Art und Weise eine Spannung U angelegt werden, die dann entsprechend variierbar ist.

Der Dämpfer 38 ist einerseits über seinen Zylinder 40 und anderseits über eine vom Innern des Zylinders 40 nach außen geführte Kolbenstange 44 am Stützquellenkopf 16' bzw. Joch 14 abgestützt. Grundsätzlich ist jedoch auch eine solche Ausführung denkbar, bei der der Dämpfer 38 über die Kolbenstange am Stützquellenkopf 16' und über dem Zylinder 40 am Joch 14 abgestützt ist.

Beim vorliegenden Ausführungsbeispiel ist der Dämpfer 38 jeweils über ein Kugelgelenk 46 am Stützquellenkopf 16' bzw. Joch 14 abgestützt.

Wie anhand der Figuren 6 und 7 zu erkennen ist, ist der Dämpfer 38 zumindest im Wesentlichen innerhalb des Druckraums 20 der Stützquelle 16 angeordnet.

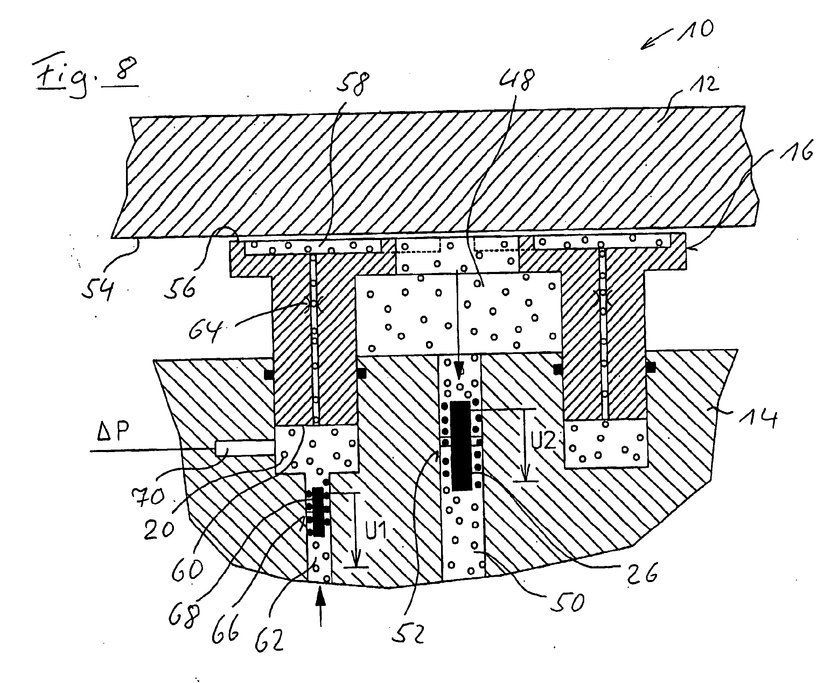

Figur 8 zeigt in schematischer geschnittener Teildarstellung eine weitere Ausführungsform der Biegeausgleichswalze 10, bei der die Stützquelle 16 als Ringelement ausgeführt ist.

Dabei steht der vom Ringelement umschlossene Innenraum 48 mit einer Ablaufleitung 50 in Verbindung, in die eine Drosselstelle 52 integriert ist. Die Drosselstelle ist dadurch variabel einstellbar, dass die Viskosität eines durch diese Drosselstelle 52 fließenden Elektrorheologischen Fluids bzw. Ferrofluids über ein elektrisches bzw. magnetisches Feld variierbar ist. Wie anhand der Figur 8 zu erkennen ist, umfasst die Drosselstelle 52 einen in der Ablaufleitung 50 angeordneten elektrischen Leiter 26, über den das Feld erzeugbar ist. An diesen Leiter kann beispielsweise eine Spannung U2 angelegt werden, die dann entsprechend variabel einstellbar ist.

Die Stützquelle 16 weist in ihrer der Mantelinnenfläche 54 zugewandten Stützfläche 56 wenigstens eine ringförmige Tasche 58 und dem Joch 14 zugewandt eine ringförmige Druckfläche 60 auf. Die Druckfläche 60 begrenzt einen Druckraum 20, der einerseits mit einer Druckmittelzuleitung 62 und andererseits über eine Drossel 64 mit der Tasche 58 in Verbindung steht.

In die Druckmittelzuleitung 62 ist eine Drosselstelle 66 integriert, die dadurch variabel einstellbar ist, dass die Viskosität eines durch diese Drosselstelle 66 fließenden Elektrorheologischen Fluids bzw. Ferrofluids über ein elektrisches bzw. magnetisches Feld variierbar ist.

Wie anhand der Figur 8 zu erkennen ist, umfasst die Drosselstelle 66 im vorliegenden Fall beispielsweise einen in der Druckmittelzuleitung 62 angeordneten elektrischen Leiter 68, über den das Feld erzeugbar ist.

An den elektrischen Leiter 68 kann beispielsweise eine Spannung U 1 angelegt werden, die entsprechend variierbar ist.

Die ringförmige Tasche 58 ist zweckmäßigerweise durch Querstege unterteilt. Dabei kann jeder Taschenabschnitt mit dem Druckraum 20 über eine Drossel 64 verbunden sein.

Wie anhand der Figur 8 zu erkennen ist, ist beim vorliegenden Ausführungsbeispiel ein direkt mit dem Druckraum 20 der Stützquelle 16 verbundener Druckaufnehmer 70 vorgesehen.

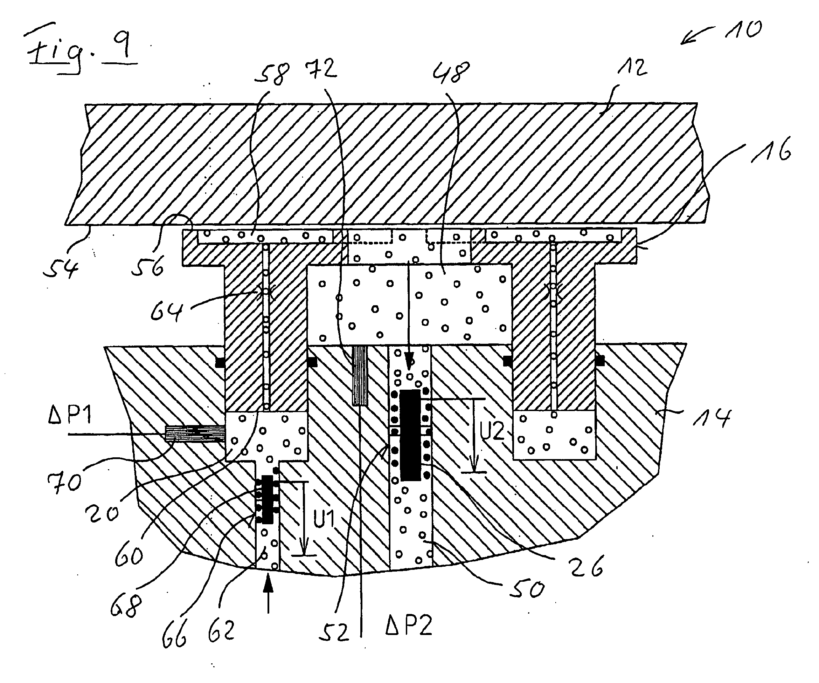

Figur 9 zeigt eine mit der Figur 8 vergleichbare Ausführungsform, wobei außer dem direkt mit dem Druckraum 20 verbundenen Druckaufnehmer 70 jedoch zusätzlich noch ein mit dem Innenraum 48 verbundener Druckaufnehmer 72 vorgesehen ist.

Im übrigen kann das die Stützquelle 16 bildende Ringelement insbesondere so ausgeführt sein und betrieben werden, wie dies in den Druckschriften DE 44 29 499 C1 und DE 195 40 791 C1 beschrieben ist.

### Bezugszeichenliste

- 10: Biegeausgleichswalze
- 12: Walzenmantel
- 14: Joch
- 16: Stützquelle
- 16': Stützquellenkopf
- 18: gemeinsame Versorgungsleitung
- 20: Druckraum
- 22: Verbindungsleitung
- 24: Drosselstelle
- 26: elektrische Leitung
- 28: Druckaufnehmer
- 30: Öltasche
- 32: Verbindungsleitung
- 34: Drosselstelle
- 36: Führungsbuchse
- 38: Dämpfer
- 40: Zylinder
- 42: Kolben
- 44: Kolbenstange
- 46: Kugelgelenk
- 48: Innenraum
- 50: Ablaufleitung
- 52: Drosselstelle
- 54: Mantelinnenfläche
- 56: Stützfläche
- 58: ringförmige Tasche
- 60: ringförmige Druckfläche
- 62: Druckmittelzuleitung
- 64: Drossel
- 66: Drosselstelle
- 68: elektrischer Leiter
- 70: Druckaufnehmer
- 72: Druckaufnehmer

## Patentansprüche

1. Biegeausgleichswalze (10) mit einem umlaufenden Walzenmantel (12), einem den Walzenmantel (12) axial durchsetzenden drehfesten Joch (14) und wenigstens einer zwischen dem Joch (14) und dem Walzenmantel (12) angeordneten Stützquelle (16), die zumindest teilweise mit einem Elektrorheologischen Fluid (ERF) und/oder Ferrofluid betrieben ist, dessen Viskosität über ein elektrisches bzw. magnetisches Feld variierbar ist,
**dadurch gekennzeichnet,**
**dass** die Stützquelle (16) in einem Zweikreissystem betrieben ist, in dem das Elektrorheologische Fluid (ERF) bzw. Ferrofluid nur der Druckregelung dient und die Schmierung der Stützquelle (16) mit herkömmlichem Öl erfolgt.

2. Biegeausgleichswalze nach Anspruch 1,
**dadurch gekennzeichnet,**
**dass** über das die Viskosität des Elektrorheologischen Fluids (ERF) bzw. Ferrofluids beeinflussende Feld der hydraulische Druck variierbar ist.

3. Biegeausgleichswalze nach Anspruch 1 oder 2,
**dadurch gekennzeichnet,**
**dass** über das die Viskosität des Elektrorheologischen Fluids (ERF) bzw. Ferrofluids beeinflussende Feld der Volumenstrom variierbar ist.

4. Biegeausgleichswalze nach Anspruch 3,
**dadurch gekennzeichnet,**
**dass** eine Volumenstromregelung vorgesehen ist.

5. Biegeausgleichswalze nach einem der vorhergehenden Ansprüche,
**dadurch gekennzeichnet,**
**dass** über das die Viskosität des Elektrorheologischen Fluids (ERF) bzw. Ferrofluids beeinflussende Feld die Dämpfungseigenschaften an der Stützquelle variierbar sind.

6. Biegeausgleichswalze nach einem der vorhergehenden Ansprüche,
**dadurch gekennzeichnet,**
**dass** über das die Viskosität des Elektrorheologischen Fluids (ERF) bzw. Ferrofluids beeinflussende Feld und die entsprechenden Änderungen im Druckraum der Stützquelle die Schwingungseigenschaften des Walzenmantels variierbar sind.

7. Biegeausgleichswalze nach einem der vorhergehenden Ansprüche,
**dadurch gekennzeichnet,**
**dass** mehrere Stützquellen (16) über eine gemeinsame Versorgungsleitung (18) mit dem Elektrorheologischen Fluid (ERF) bzw. Ferrofluid versorgt sind, in der der Systemdruck gehalten wird.

8. Biegeausgleichswalze nach Anspruch 7,
**dadurch gekennzeichnet,**
**dass** zwischen dem Druckraum (20) einer jeweiligen Stützquelle (16) und der gemeinsamen Versorgungsleitung (18) jeweils eine Verbindungsleitung (22) vorgesehen ist, in die eine Drosselstelle (24) integriert ist, in der zur Erzeugung des Feldes ein elektrischer Leiter (26) angeordnet ist.

9. Biegeausgleichswalze nach einem der vorhergehenden Ansprüche,
**dadurch gekennzeichnet,**
**dass** ein direkt mit dem Druckraum (20) der Stützquelle (16) verbundener Druckaufnehmer (28) vorgesehen ist.

10. Biegeausgleichswalze nach einem der vorhergehenden Ansprüche,
**dadurch gekennzeichnet,**
**dass** der zur Druckregelung vorgesehene elektrische Regler außerhalb der Walze angeordnet ist.

11. Biegeausgleichswalze nach einem der vorhergehenden Ansprüche,
**dadurch gekennzeichnet,**
**dass** die Öltaschen (30) der Stützquelle (16) mit konstantem Volumenstrom versorgt sind.

12. Biegeausgleichswalze nach einem der vorhergehenden Ansprüche,
**dadurch gekennzeichnet,**
**dass** das Elektrorheologische Fluid (ERF) bzw. Ferrofluid für die Regelung des Drucks im Druckraum (20) der Stützquelle (16) in einem separaten Kreislauf fließt.

13. Biegeausgleichswalze nach einem der vorhergehenden Ansprüche,
**dadurch gekennzeichnet,**
**dass** zwischen dem Druckraum (20) einer jeweiligen Stützquelle (16) und dem Tank der ERF- bzw. Ferrofluid-Versorgung jeweils eine Verbindungsleitung (32) vorgesehen ist, in die eine Drosselstelle (34) zum Halten des Drucks im Druckraum (20) integriert ist.

14. Biegeausgleichswalze nach Anspruch 13,
**dadurch gekennzeichnet,**
**dass** die Drosselstelle (34) eine Blende oder Kapillare umfasst.

15. Biegeausgleichswalze nach Anspruch 14,
**dadurch gekennzeichnet,**
**dass** die Drosselstelle (34) einen elektrischer Leiter (26) umfasst.

16. Biegeausgleichswalze nach einem der vorhergehenden Ansprüche,
**dadurch gekennzeichnet,**
**dass** über die Viskosität des Elektrorheologischen Fluids (ERF) bzw. Ferrofluids zwischen der Führungsbuchse (36) der Stützquelle (16) und dem Joch (14) die viskose Dämpfung der relativ zum Joch (14) bewegten Stützquelle (16) variierbar ist.

17. Biegeausgleichswalze nach einem der vorhergehenden Ansprüche,
**dadurch gekennzeichnet,**
**dass** der Stützquelle (16) ein Dämpfer (38) zugeordnet ist, der einerseits am Stützquellenkopf (16') und anderseits am Joch (14) abgestützt ist und Elektrorheologisches Fluid (ERF) bzw. Ferrofluid enthält, über dessen durch ein entsprechendes Feld beeinflussbare Viskosität die Dämpfungseigenschaften am relativ zum Joch (14) bewegbaren Stützquellenkopf (16') und/oder die Schwingungseigenschaften des Walzenmantels (12) variierbar sind.

18. Biegeausgleichswalze nach Anspruch 17,
**dadurch gekennzeichnet,**
**dass** der Dämpfer (38) einen das Elektrorheologische Fluid (ERF) bzw. Ferrofluid enthaltenden Zylinder (40) und einen im Zylinder (40) angeordneten Kolben (42) umfasst, dessen Außenquerschnitt geringer als der Innenquerschnitt des Zylinders (40) ist, so dass im Betrieb durch den Kolben (42) verdrängtes Fluid den radialen Bereich zwischen dem Kolben (42) und der Zylinderinnenseite passieren kann.

19. Biegeausgleichswalze nach Anspruch 18,
**dadurch gekennzeichnet,**
**dass** das jeweilige, die Viskosität des Elektrorheologischen Fluids (ERF) bzw. Ferrofluids beeinflussende Feld in dem radialen Bereich zwischen dem Kolben (42) und der Zylinderinnenseite erzeugt wird.

20. Biegeausgleichswalze nach einem der Ansprüche 18 oder 19,
**dadurch gekennzeichnet,**
**dass** der Dämpfer (38) einerseits über seinen Zylinder (40) und andererseits über eine vom Innern des Zylinders (40) nach außen geführte Kolbenstange (44) am Stützquellenkopf (16') bzw. Joch (14) oder umgekehrt abgestützt ist.

21. Biegeausgleichswalze nach einem der Ansprüche 17 bis 20,
**dadurch gekennzeichnet,**
**dass** der Dämpfer (38) jeweils über ein Kugelgelenk (40) am Stützquellenkopf (16') bzw. Joch (14) abgestützt ist.

22. Biegeausgleichswalze nach einem der Ansprüche 17 bis 21,
**dadurch gekennzeichnet,**
**dass** der Dämpfer (38) zumindest im Wesentlichen innerhalb des Druckraums (20) der Stützquelle (16) angeordnet ist.

23. Biegeausgleichswalze nach einem der vorhergehenden Ansprüche,
**dadurch gekennzeichnet,**
**dass** die Stützquelle (16) als Ringelement ausgeführt ist.

24. Biegeausgleichswalze nach Anspruch 23,
**dadurch gekennzeichnet,**
**dass** der vom Ringelement umschlossene Innenraum (48) mit einer Ablaufleitung (50) in Verbindung steht, in die eine Drosselstelle (52) integriert ist, die **dadurch** variabel einstellbar ist, dass die Viskosität eines durch diese Drosselstelle (52) fließenden Elektrorheologischen Fluids (ERF) bzw. Ferrofluids über ein elektrisches bzw. magnetisches Feld variierbar ist.

25. Biegeausgleichswalze nach Anspruch 24,
**dadurch gekennzeichnet,**
**dass** die Drosselstelle (52) einen in der Ablaufleitung (50) angeordneten elektrischen Leiter (26) umfasst, über den das Feld erzeugbar ist.

26. Biegeausgleichswalze nach einem der vorhergehenden Ansprüche,
**dadurch gekennzeichnet,**
**dass** ein direkt mit dem Druckraum (20) der Stützquelle (16) verbundener Druckaufnehmer (70) vorgesehen ist.

27. Biegeausgleichswalze nach einem der vorhergehenden Ansprüche,
**dadurch gekennzeichnet,**
**dass** ein direkt mit dem Innenraum (48) verbundener Druckaufnehmer (72) vorgesehen ist.

## Claims

1. Controlled deflection roll (10) having a revolving roll shell (12), a yoke (14) which passes axially through the roll shell (12) and is fixed against rotation, and at least one source of support (16) arranged between the yoke (14) and the roll shell (12), which source of support (16) is at least partly operated with an electrorheological fluid (ERF) and/or ferrofluid, of which the viscosity can be varied via an electric or magnetic field, **characterized in that** the source of support (16) is operated in a two-circuit system, in which the electrorheological fluid (ERF) or ferrofluid is used only for the pressure regulation and the lubrication of the source of support (16) is carried out with conventional oil.

2. Controlled deflection roll according to Claim 1, **characterized in that** the hydraulic pressure can be varied via the field that influences the viscosity of the electrorheological fluid (ERF) or ferrofluid.

3. Controlled deflection roll according to Claim 1 or 2, **characterized in that** the volume flow can be varied via the field that influences the viscosity of the electrorheological fluid (ERF) or ferrofluid.

4. Controlled deflection roll according to Claim 3, **characterized in that** volume flow regulation is provided.

5. Controlled deflection roll according to one of the preceding claims, **characterized in that** the damping characteristics of the source of support can be varied via the field that influences the viscosity of the electrorheological fluid (ERF) or ferrofluid.

6. Controlled deflection roll according to one of the preceding claims, **characterized in that** the oscillatory characteristics of the roll shell can be varied via the field that influences the viscosity of the electrorheological fluid (ERF) or ferrofluid and the corresponding changes in the pressure chamber of the source of support.

7. Controlled deflection roll according to one of the preceding claims, **characterized in that** a plurality of sources of support (16) are supplied with the electrorheological fluid (ERF) or ferrofluid via a common supply line (18), in which the system pressure is maintained.

8. Controlled deflection roll according to Claim 7, **characterized in that**, between the pressure chamber (20) of a respective source of support (16) and the common supply line (18), a connecting line (22) is preferably provided in each case, in which there is integrated a throttling point (24) in which an electric conductor (26) is arranged in order to produce the field.

9. Controlled deflection roll according to one of the preceding claims, **characterized in that** a pressure sensor (28) connected directly to the pressure chamber (20) of the source of support (16) is provided.

10. Controlled defection roll according to one of the preceding claims, **characterized in that** the electric controller provided for pressure regulation is arranged outside the roll.

11. Controlled deflection roll according to one of the preceding claims, **characterized in that** the oil pockets (30) of the source of support (16) are supplied with a constant volume flow.

12. Controlled deflection roll according to one of the preceding claims, **characterized in that** the electrorheological fluid (ERF) or ferrofluid for the regulation of the pressure in the pressure chamber (20) of the source of support (16) flows in a separate circuit.

13. Controlled deflection roll according to one of the preceding claims, **characterized in that** in each case a connecting line (32), in which a throttling point (34) is integrated in order to maintain the pressure in the pressure chamber (20), is provided between the pressure chamber (20) of a respective source of support (16) and the tank of the ERF or ferrofluid supply.

14. Controlled deflection roll according to Claim 13, **characterized in that** the throttling point (34) comprises an aperture stop or capillary.

15. Controlled deflection roll according to Claim 14, **characterized in that** the throttling point (34) comprises an electric conductor.

16. Controlled deflection roll according to one of the preceding claims, **characterized in that** the viscous damping of the source of support (16), which is moved relative to the yoke (14), can be varied via the viscosity of the electrorheological fluid (ERF) or ferrofluid between the guide bush (36) of the source of support (16) and the yoke (14).

17. Controlled deflection roll according to one of the preceding claims, **characterized in that** the source of support (16) is assigned a damper (38), which is supported at one end on the head (16') of the source of support and at the other end on the yoke (14) and contains electrorheological fluid (ERF) or ferrofluid, via the viscosity of which, which can be influenced by an appropriate field, the damping characteristics of the head (16') of the source of support, which can be moved relative to the yoke (14), and/or the oscillatory properties of the roll shell (12) can be varied.

18. Controlled deflection roll according to Claim 17, **characterized in that** the damper (38) comprises a cylinder (40) containing the electrorheological fluid (ERF) or ferrofluid and a piston (42) arranged in the cylinder (40), of which the external cross section is smaller than the internal cross section of the cylinder (40), so that in operation fluid displaced by the piston (42) can pass through the radial region between the piston (42) and the inner side of the cylinder.

19. Controlled deflection roll according to Claim 18, **characterized in that** the respective field that influences the viscosity of the electrorheological fluid (ERF) is produced in the radial region between the piston (42) and the inner side of the cylinder.

20. Controlled deflection roll according to either of Claims 18 and 19, **characterized in that** the damper is supported on the head (16') of the source of support and on the yoke (14) at one end via its cylinder (40) and at the other end via a piston rod (44) led to the outside from the interior of the cylinder (14), or vice versa.

21. Controlled deflection roll according to one of Claims 17 to 20, **characterized in that** the damper (38) is supported on the head (16') of the source of support and on the yoke (14) via a spherical joint (40) in each case.

22. Controlled deflection roll according to one of Claims 17 to 21, **characterized in that** the damper (38) is at least substantially arranged within the pressure chamber (20) of the source of support (16).

23. Controlled deflection roll according to one of the preceding claims, **characterized in that** the source of support (16) is designed as a ring element.

24. Controlled deflection roll according to Claim 23, **characterized in that** the internal space (48) enclosed by the ring element is connected to a discharge line (50) in which a throttling point (52) is integrated, which can be adjusted variably by the viscosity of an electrorheological fluid (ERF) or ferrofluid flowing through this throttling point (52) being variable via an electric or magnetic field.

25. Controlled deflection roll according to Claim 24, **characterized in that** the throttling point (52) comprises an electric conductor (26) which is arranged in the discharge line (15) and via which the field can be produced.

26. Controlled deflection roll according to one of the preceding claims, **characterized in that** a pressure sensor (70) connected directly to the pressure chamber (20) of the source of support (16) is provided.

27. Controlled deflection roll according to one of the preceding claims, **characterized in that** a pressure sensor (72) connected directly to the internal space (48) is provided.

## Revendications

1. Rouleau à réglage de flexion (10) avec une enveloppe de rouleau périphérique (12), une culasse (14) bloquée en rotation, traversant axialement l'enveloppe de rouleau (12), et au moins une source de support (16) située entre la culasse (14) et l'enveloppe de rouleau (12), qui fonctionne au moins partiellement avec un fluide électrorhéologique (fluide ER) et/ou un ferrofluide, dont la viscosité peut être ajustée au moyen d'un champ magnétique ou électrique,
**caractérisé en ce que**
la source de support (16) fonctionne dans un système à double circuit, dans lequel le fluide électrorhéologique (fluide ER) ou le ferrofluide ne sert qu'au réglage de la pression et la lubrification de la source de support (16) se fait avec de l'huile classique.

2. Rouleau à réglage de flexion selon la revendication 1,
**caractérisé en ce que**
la pression hydraulique peut être ajustée au moyen du champ influençant la viscosité du fluide électrorhéologique (fluide ER) ou du ferrofluide.

3. Rouleau à réglage de flexion selon les revendications 1 ou 2,
**caractérisé en ce que**
le débit volumique peut être ajusté au moyen du champ influençant la viscosité du fluide électrorhéologique (fluide ER) ou du ferrofluide.

4. Rouleau à réglage de flexion selon la revendication 3,
**caractérisé en ce que**
il est prévu un réglage du débit volumique.

5. Rouleau à réglage de flexion selon l'une des revendications précédentes,
**caractérisé en ce que**
les caractéristiques d'amortissement sur la source de support (16) peuvent être ajustées au moyen du champ influençant la viscosité du fluide électrorhéologique (fluide ER) ou du ferrofluide.

6. Rouleau à réglage de flexion selon l'une des revendications précédentes,
**caractérisé en ce que**
les caractéristiques d'oscillation peuvent être ajustées au moyen du champ influençant la viscosité du fluide électrorhéologique (fluide ER) ou du ferrofluide et au moyen des modifications correspondantes dans la chambre de pression de la source de support.

7. Rouleau à réglage de flexion selon l'une des revendications précédentes,
**caractérisé en ce que**
plusieurs sources de support (16) sont alimentées en fluide électrorhéologique (fluide ER) ou en ferrofluide par une conduite d'alimentation (18) commune, dans laquelle la pression de système est maintenue.

8. Rouleau à réglage de flexion selon la revendication 7,
**caractérisé en ce que**
une conduite de liaison (22) est à chaque fois prévue entre la chambre de pression (20) d'une source de support respective (16) et la conduite d'alimentation commune (18), conduite de liaison à laquelle est intégré un étranglement (24) où se trouve un conducteur électrique (26) pour la fabrication du champ.

9. Rouleau à réglage de flexion selon l'une des revendications précédentes,
**caractérisé en ce que**
il est prévu un capteur de pression (28) directement relié à la chambre de pression (20) de la source de support (16).

10. Rouleau à réglage de flexion selon l'une des revendications précédentes,
**caractérisé en ce que**
le réglage électrique prévu pour régler la pression est disposé à l'extérieur du rouleau.

11. Rouleau à réglage de flexion selon l'une des revendications précédentes,
**caractérisé en ce que**
les poches d'huile (30) de la source de support (16) sont alimentées avec un débit volumique constant.

12. Rouleau à réglage de flexion selon l'une des revendications précédentes,
**caractérisé en ce que**
le fluide électrorhéologique (fluide ER) ou le ferrofluide pour le réglage de la pression dans la chambre de pression (20) de la source de support (16) s'écoule dans un circuit séparé.

13. Rouleau à réglage de flexion selon l'une des revendications précédentes,
**caractérisé en ce que**
une conduite de liaison (32) est prévue entre la chambre de pression (20) d'une source de support respective (16) et le réservoir de l'alimentation en fluide électrorhéologique (fluide ER) ou ferrofluide, conduite de liaison à laquelle est intégré un étranglement (34) pour le maintien de la pression dans la chambre de pression (20).

14. Rouleau à réglage de flexion selon la revendication 13,
**caractérisé en ce que**
l'étranglement (34) comprend un diaphragme ou une capillaire.

15. Rouleau à réglage de flexion selon la revendication 14,
**caractérisé en ce que**
l'étranglement (34) comprend un conducteur électrique (26).

16. Rouleau à réglage de flexion selon l'une des revendications précédentes,
**caractérisé en ce que**
l'amortissement visqueux de la source de support (16) mobile par rapport à la culasse (14) peut être ajusté au moyen de la viscosité du fluide électrorhéologique (fluide ER) ou ferrofluide entre la douille de guidage (36) de la source de support (16) et la culasse (14).

17. Rouleau à réglage de flexion selon l'une des revendications précédentes,
**caractérisé en ce que**
un amortisseur (38) est attribué à la source de support (16), en s'appuyant d'une part sur la tête de la source de support (16') et d'autre part sur la culasse (14) et contenant du fluide électrorhéologique (fluide ER) ou ferrofluide, amortisseur dont la viscosité, qui peut être influencée par un champ correspondant, permet d'ajuster les caractéristiques d'amortissement sur la tête de la source de support (16') déplaçable par rapport à la culasse (14) et/ou les caractéristiques d'oscillation de l'enveloppe de rouleau (12).

18. Rouleau à réglage de flexion selon la revendication 17,
**caractérisé en ce que**
l'amortisseur (38) comprend un cylindre (40) contenant le fluide électrorhéologique (fluide ER) ou le ferrofluide, ainsi qu'un piston (42) disposé dans le cylindre (40), dont la section transversale extérieure est inférieure à la section transversale intérieure du cylindre (40), de façon à ce que pendant le fonctionnement, le fluide refoulé par le piston (42) puisse passer la région radiale entre le piston (42) et la face intérieure du cylindre.

19. Rouleau à réglage de flexion selon la revendication 18,
**caractérisé en ce que**
le champ respectif influençant la viscosité du fluide électrorhéologique (fluide ER) ou ferrofluide est produit dans la région radiale entre le piston (42) et la face intérieure du cylindre.

20. Rouleau à réglage de flexion selon l'une des revendications 18 ou 19,
**caractérisé en ce que**
l'amortisseur (38) s'appuie sur la tête de la source de support (16') ou sur la culasse (14), d'une part par son cylindre (40) et d'autre part par une tige de piston (44) guidée de l'intérieur du cylindre (40) vers l'extérieur, ou inversement.

21. Rouleau à réglage de flexion selon l'une des revendications 17 à 20,
**caractérisé en ce que**
l'amortisseur (38) s'appuie respectivement sur la tête de la source de support (16') ou sur la culasse (14) par une articulation sphérique (40).

22. Rouleau à réglage de flexion selon l'une des revendications 17 à 21,
**caractérisé en ce que**
l'amortisseur (38) est disposé au moins sensiblement à l'intérieur de la chambre de pression (20) de la source de support (16).

23. Rouleau à réglage de flexion selon l'une des revendications précédentes,
**caractérisé en ce que**
la source de support (16) est conçue comme un élément annulaire.

24. Rouleau à réglage de flexion selon la revendication 23,
**caractérisé en ce que**
l'espace intérieur (48) entouré par l'élément annulaire est relié à une conduite d'évacuation (50) à laquelle est intégré un étranglement (52), lequel peut être ajusté de façon variable grâce au fait que la viscosité d'un fluide électrorhéologique (fluide ER) ou ferrofluide s'écoulant par cet étranglement (52) peut être ajustée au moyen d'un champ magnétique ou électrique.

25. Rouleau à réglage de flexion selon la revendication 24,
**caractérisé en ce que**
l'étranglement (52) comprend un conducteur électrique (26) disposé dans la conduite d'évacuation (50), permettant de produire le champ.

26. Rouleau à réglage de flexion selon l'une des revendications précédentes,
**caractérisé en ce que**
il est prévu un capteur de pression (70) relié directement à la chambre de pression (20) de la source de support (16).

27. Rouleau à réglage de flexion selon l'une des revendications précédentes,
**caractérisé en ce que**
il est prévu un capteur de pression (72) relié directement avec l'espace intérieur (48).
